(19) Europäisches Patentamt
European Patent Office
Office européen des brevets

(11) EP 0 646 609 B1

(12) # EUROPEAN PATENT SPECIFICATION

(45) Date of publication and mention of the grant of the patent:
**21.02.2001 Bulletin 2001/08**

(51) Int Cl.[7]: **C08G 18/08**, C08G 18/83

(21) Application number: **94115431.2**

(22) Date of filing: **30.09.1994**

(54) **Aqueous dispersion of an aqueous, hydrazine-terminated polyurethane**

Wässrige Dispersion eines wässrigen Polyurethanes mit Hydrazinendgruppen

Dispersion aqueuse d'un polyuréthane à terminaison hydrazine

(84) Designated Contracting States:
**DE FR GB IT**

(30) Priority: **01.10.1993 JP 24655493**

(43) Date of publication of application:
**05.04.1995 Bulletin 1995/14**

(73) Proprietor: **TOYO INK MANUFACTURING CO., LTD.**
**Tokyo (JP)**

(72) Inventors:
- **Ishiyama, Masaaki, c/o Toyo Ink Manuf.Co., Ltd. Tokyo (JP)**
- **Matuura, Takeaki, c/o Toyo Ink Manuf.Co., Ltd. Tokyo (JP)**
- **Mihoya, Takashi, c/o Toyo Ink Manuf.Co., Ltd. Tokyo (JP)**
- **Fujimatsu, Shinya, c/o Toyo Ink Manuf.Co., Ltd. Tokyo (JP)**
- **Utsugi, Masayoshi, c/o Toyo Ink Manuf.Co., Ltd. Tokyo (JP)**
- **Iibuchi, Kouichi, c/o Toyo Ink Manuf.Co., Ltd. Tokyo (JP)**

(74) Representative: **Goddar, Heinz J., Dr.**
**FORRESTER & BOEHMERT**
**Franz-Joseph-Strasse 38**
**80801 München (DE)**

(56) References cited:
**EP-A- 0 300 335** **EP-A- 0 332 326**
**GB-A- 2 107 338** **US-A- 5 137 967**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

FIELD OF THE INVENTION

The present invention relates to an aqueous dispersion of a specific aqueous polyurethane and to a composition containing the aqueous dispersion. More particularly, the present invention relates to an aqueous dispersion which is used for an ink, a coating or an adhesive for metal, wood, paper, leather, glass, fiber, plastic, foamed articles, concrete and the like and in which storage stability, water-resistance, pigment dispersibility and adhesion to various substrates are excellent, and to a composition containing the aqueous dispersion.

PRIOR ART OF THE INVENTION

Dispersing or dissolving a resin used in an ink, a coating or an adhesive into an aqueous medium has conventionally been achieved by using a dispersant or an emulsifier or by the action of a dispersing group, an emulsifying group or a dissolving group (an ionic functional group and/or a nonionic functional group) contained in the resin. It has been generally found that the resins of the latter self-emulsifying or self-dissolving type result in better performance.

Aqueous dispersions or solutions of self-emulsifying or self-dissolving polyurethanes containing ionic functional groups alone have a drawback in that storage stability and water-resistance are inferior even though adhesion to substrates and dispersibility of pigments are relatively good. Therefore, it was proposed for overcoming the drawback that nonionic functional groups alone or a combination of nonionic functional groups and ionic groups should be contained in the resin.

As for the adhesion to substrates, an aqueous resin dispersion having sufficiently satisfactory adhesion to substrates having smooth surfaces, particularly to non-polar substrates having smooth surfaces such as plastics, has not been obtained even though aqueous dispersions having better properties than conventional materials for adhesion to substrates having porous and rough surfaces such as paper have been obtained. As the method for improving the above drawback of the aqueous dispersion, it has heretofore been known that a non-polar material such as a hydrocarbon compound can be added to the aqueous dispersion or that a polyurethane in which a hydrocarbon group is incorporated in the end and/or other parts of the main chain by reaction of a hydrocarbon compound having monovalent or divalent active hydrogen with an organic diisocyanate can be used.

However, the aqueous dispersions of the polyurethane described above and the compositions containing the aqueous dispersions have drawbacks in that dispersibility in water and storage stability are inferior and also in that dispersibility of pigments and adhesion to polar materials are decreased.

As for the polyoxyethylene unit, a method of incorporating polyoxyethylene units in the end and/or other parts of the main chain by reaction of a monovalent or divalent polyethylene glycol with an organic diisocyanate has heretofore been known. The aqueous dispersion of polyurethane obtained by this method has a drawback in that satisfactory properties cannot be obtained because adhesion to substrates and dispersibility of pigments are insufficient even though storage stability and water-resistance are good. Methods of incorporating polyoxyethylene chains as side chains are disclosed in Japanese Patent Application Laid-Open Nos. Heisei 1(1989)-104612 and Heisei 1(1989)-104613. More specifically, 1 mol of an organic diisocyanate is brought into reaction with about 1 mol of a polyethylene glycol monoether. The product is brought into reaction with about 1 mol of a dialkanolamine. Then, the product of this reaction is brought into reaction with an organic diisocyanate to incorporate polyoxyethylene chains as side chains. However, the aqueous dispersion of polyurethane obtained by this method has a drawback in that fluidity is decreased by an increase in viscosity and, in a worse case, gelation of the polyurethane occurs because the unreacted organic diisocyanate remains after the synthetic stages of the intermediate products.

EP-A-0 300 335 discloses an aqueous polyurethane emulsion for finishing leather and hides, obtained by reaction of a diisocyanate monomer, a polyether monomer and a hydroxylated carboxylic acid with a tertiary amine compound and hydrazine or aliphatic diamines.

SUMMARY OF THE INVENTION

An object of the present invention is to provide an aqueous dispersion of an aqueous hydrazine-terminated polyurethane in which storage stability, water-resistance, pigment dispersibility and adhesion to various kinds of substrates, particularly non-polar substrates, are excellent. Another object of the present invention is to provide a composition for ink, coating and adhesive in which the aqueous dispersion of the aqueous polyurethane described above is used and which has the excellent properties described above.

In order to achieve the above-described object, the present invention provides an aqueous dispersion of an aqueous polyurethane comprising an ionic functional group, polyoxyethylene units and terminal hydrazine functional groups, wherein the content of the ionic functional group is 5 to 180 milliequivalent per 100 g of the aqueous polyurethane and the content of the polyoxyethylene units is 20 % by weight or less based on the weight of the aqueous polyurethane.

In another aspect of the present invention, in the aqueous dispersion described above, the aqueous polyurethane is a polyurethane having terminal hydrazine functional groups obtained by reaction of: a polymer having terminal isocyanate groups obtained by reaction of a compound (A) having at least one ionic functional group and at least two functional groups reactive with isocyanate group, a compound (B) having polyoxyethylene units and an organic polyisocyanate (C); with (2) a polyhydrazine compound (D).

Another aspect of the present invention is an aqueous ink or coating composition comprising one of the aqueous dispersions described above, pigment, water, and optionally, a water-soluble organic solvent, wherein the content of the aqueous polyurethane in the aqueous dispersion is 2 to 40 % by weight, the content of the pigment is 2 to 80 % by weight, the total content of water is 10 to 96 % by weight, and the content of the water-soluble organic solvent is 0 to 50 % by weight, each content based on the weight of the aqueous ink or coating composition.

Another aspect of the present invention is an aqueous adhesive composition comprising one of the aqueous dispersions described above, water, and optionally, a water-soluble organic solvent, wherein the content of the aqueous polyurethane in the aqueous dispersion is 2 to 40 % by weight, the total content of water is 10 to 96 % by weight, and the content of the water-soluble organic solvent is 0 to 50 % by weight, each content based on the weight of the aqueous adhesive composition.

## DETAILED DESCRIPTION OF THE INVENTION

The content of the ionic functional group in the aqueous polyurethane of the present invention is in the range of 5 to 180 milliequivalent per 100 g of the aqueous polyurethane. The content of the polyoxyethylene unit is 20 % by weight or less of the weight of the resin. Particularly, a content of the ionic functional group in the range of 10 to 120 milliequivalent and a content of the polyoxyethylene unit of 10 % by weight or less are preferable because good balance between dispersibility in water or storage stability and water resistance can be obtained.

The present invention is described in more detail hereinafter.

As the compound (A) having at least one ionic functional group and at least two functional groups reactive with isocyanate group, compounds disclosed in Japanese Patent Publication Showa 43(1968)-9076 can be used. The ionic functional group is a member selected from the group consisting of quaternary ammonium group, tertiary amino group, carboxylate group, carboxyl group, sulfonate group, sulfonic acid group, phosphonium group, phosphinic acid group, sulfuric acid ester group and mixtures of these groups. Among these groups, ionic precursor groups, such as carboxyl group and tertiary amino group, can be easily converted into the ionic groups by the neutralization reaction or the reaction of forming a quaternary compound using ammonia, a tertiary amine, acetic acid, or hydrochloric acid.

Specific examples of the compound (A) having at least one ionic functional group and at least two functional groups reactive with isocyanate group include dimethylolpropionic acid, amino acids, aminosulfonic acids, oxyalkylation products of these compounds, polyesterification products of these compounds, diaminocarboxylic acids, sodium diaminobenzenesulfonate, glycerol monophosphate disodium salt, sodium hydroxyethylphosphonate, sodium dimethylolphosphinate, N-methylethanolamine, polyester polyols having units of sodium 5-sulfoisophthalate, and polyester polyols containing carboxyl groups which are obtained by addition-condensation reaction of a low molecular weight glycol with an aliphatic or aromatic polybasic acid anhydride.

When the polyoxyethylene units are incorporated in the main chain or at the end of the chain of the aqueous polyurethane, examples of the compound (B) having polyoxyethylene units include generally known diols, such as polyethylene glycol and polyethylene glycol-polypropylene glycol copolymer, and monoalcohols which are monoalkyl ethers of these diols. On the other hand, when the polyoxyethylene units are incorporated in side chains of the aqueous polyurethane, examples of the compound (B) having polyoxyethylene units include the following compounds. (1) Diols (E) having polyoxyethylene units in side chains; more specifically, diols having polyoxyethylene units in side chains disclosed in Japanese Patent Application Laid-Open No. Showa 63(1988)-305119, and reaction products of about 1 mol of a dialkanolamine with the reaction product of 1 mol of an organic diisocyanate with about 1 mol of a polyethylene glycol monoalkyl ether which are disclosed in Japanese Patent Application Laid-Open Nos. Heisei 1(1989)-104612 and Heisei 1(1989)-104613. (2) Polyesters (F) obtained by reaction of organic compounds having two hydroxyl groups, cyclic acid anhydrides, and monomers having one epoxy group and polyoxyethylene units. (3) Poly(alkylene oxide) (G) represented by the following general formula (1):

$$X\text{-}(O\text{-}C_2H_4)_m\text{-}(O\text{-}Y)_n\text{-}OCH_2CH(OH)CH_2OH \qquad \text{general formula (1)}$$

wherein X indicates a hydrocarbon group having 1 to 4 carbon atoms, Y indicates a hydrocarbon group having 3 to 8

carbon atoms, m indicates an integer of 1 to 100, and n indicates an integer which is equal to or less than m and not negative.

The organic compound having two hydroxyl groups used in the preparation of the polyester (F) described above includes, for example, a member selected from the group consisting of: low molecular weight diols, such as ethylene glycol, propylene glycol, 1,4-butylene glycol, hexanediol, cyclohexanedimethanol, bisphenol A, and diethylene glycol; high molecular weight diols, such as polyether diols like polyethylene glycol and polytetramethylene glycol, conventional polyester diols, and conventional polycarbonate diols; and mixtures of these diols.

The cyclic acid anhydride includes, for example, a member selected from the group consisting of: saturated or unsaturated aliphatic dicarboxylic acid anhydrides, such as maleic anhydride, succinic anhydride, itaconic anhydride, and 1,2-cyclohexanedicarboxylic acid anhydride; aromatic dicarboxylic acid anhydrides, such as phthalic anhydride, tetrabromophthalic anhydride, and dichlorophthalic anhydride. heterocyclic dicarboxylic acid anhydrides; and mixtures of these anhydrides.

The monomer having one epoxy group and polyoxyethylene units (referred to as an epoxy monomer hereinafter) includes the compounds represented by the following general formula (2):

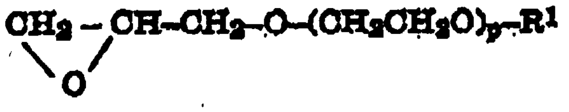

... general formula (2)

wherein p indicates an integer of 1 to 100, and $R^1$ indicates one of a saturated alkyl group, unsaturated alkyl group, an aryl group, a hetero-ring group, and a polypropylene oxide group having one of these groups at the end thereof. The alkyl group, the aryl group, and the hetero-ring group may be substituted with a halogen atom or may be unsubstituted. Specific examples of the monomer include polyethylene glycol methyl glycidyl ether, polyethylene glycol phenyl glycidyl ether and butyl glycidyl ether of polyethylene glycol-polypropylene glycol copolymer.

In the prepartion of the polyester (F), it is considered that an ester compound having a carboxyl group is formed first by reaction of the organic compound having two hydroxyl groups acting as the reaction initiator with the cyclic acid anhydride, and the carboxyl group in the ester compound reacts with the epoxy monomer to form the polyester having hydroxyl group. Preferable amounts of the three components which are brought into reaction as expressed by the mol ratio of the organic compound / the cyclic acid anhydride / the epoxy monomer are 0.1 to 0.5 / 1 / 1 to 1.05. The reaction is conducted at a temperature, for example, of about 50 to about 140°C. An organic solvent which does not take part in the reaction may be used if necessary.

Particularly, the aqueous polyurethane having polyoxyethylene units in side chains has excellent adhesion to various kinds of substrates having different polarity and excellent pigment dispersibility.

As the organic polyisocyanate (C), generally known organic polyisocyanates can be used. Examples of such organic polyisocyanates include: diisocyanates, such as tolylene diisocyanate, 4,4'-diphenylmethane diisocyanate, hexamethylene diisocyanate, xylylene diisocyanate, 1,5-naphthalene diisocyanate, isophorone diisocyanate, lysine diisocyanate, hydrogenated 4,4'-diphenylmethane diisocyanate, and hydrogenated tolylene diisocyanate; adducts having isocyanates at both ends formed from glycols or diamines and these diisocyanates; and mixtures of these compounds. Polyisocyanates having three or more functionalities, such as triphenylmethane triisocyanate and polymethylenepolyphenyl isocyanate, can be used as a mixture with these diisocyanates if necessary. Monoisocyanates may also be used as a molecular weight modifier if necessary. Commercial polyisocyanate adduct products, such as products of Desmodur series (products of Bayer, Germany; trade names), may be used as well.

Furthermore, an active hydrogen compound ($L^1$) generally used in the preparation of polyurethane, such as a polyhydroxy compound and a polyamine compound, may be used in the present invention. As the polyhydroxy compound, water; a low molecular weight polyol, such as a diol like ethylene glycol, butanediol, propanediol, 1,6-hexanediol, neopentyl glycol, and cyclohexanedimethanol, a triol like trimethylolpropane and glycerol, and a tetraol like pentaerythritol; and a high molecular weight diol, such as a polyether diol and a polyester diol; can be used. Furthermore, a bisphenol, such as bisphenol A and bisphenol F, can be used as well.

Examples of the polyether diol include: polymers, copolymers and graft copolymers of tetrahydrofuran or alkylene oxide, such as ethylene oxide, propylene oxide, and butylene oxide; polyether glycols prepared by condensation of hexanediol, methylhexanediol, heptanediol, octanediol or mixtures of these diols; and polyether glycols modified with propoxy or ethoxy group.

Examples of the polyester diol include polyester diols obtained by the condensation reaction of a saturated or unsaturated low molecular weight glycol, such as ethylene glycol, propylene glycol, 1,3-butanediol, 1,4-butanediol, neopentyl glycol, hexanediol, methyl-1,5-pentanediol, octanediol, cyclohexanediol, 2-ethyl-1,3-hexanediol, bisphenol A, diethylene glycol, triethylene glycol, and dipropylene glycol, with aliphatic or aromatic dibasic acids or aromatic dibasic acid esters; polyester polyols obtained by the ring-opening polymerization of cyclic esters, such as poly-ε-caprolactone; polycarbonate polyols; and silicone polyols. Hydroxy-terminated reaction products from these compounds and diisocyanates can be used as well.

Examples of the polyamine compound include diamines, such as ethylenediamine, trimethylenediamine, tetramethylenediamine, pentamethylenediamine, 1,7-diaminoheptane, 1,8-diaminooctane, xylylenediamine, 1,4-diaminocyclohexane, isophoronediamine, and phenylenediamine; triamines, such as triaminopropane; amino-terminated or hydroxy-terminated reaction products obtained by reaction of these compounds with organic polyisocyanate compounds or polyepoxy compounds.

Examples of the polyhydrazine compound (D) include hydrazine; dihydrazides such as oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide, and phthalic acid dihydrazide; carbonic acid dihydrazide; carbodihydrazide; thiocarbodihydrazide, and 4,4'-oxybisbenzenesulfonyl hydrazide. Dihydrazides are particularly preferable among these compounds.

For preparation of the aqueous polyurethane used in the aqueous compositions for ink, coating and adhesive of the present invention, the compound (A) having at least one ionic functional group, the compound (B) having polyoxyethylene units, an excess amount of the organic polyisocyanate (C), and optionally, the active hydrogen compound ($L^1$), all described above, are brought into reaction with each other according to a conventional method at a temperature of room temperature to about 140°C, preferably about 40 to about 100°C, to form the polymer ($P^1$) having terminal isocyanate groups, which is then brought into reaction with the polyhydrazine compound (D).

The polymer ($P^1$) having terminal isocyanate groups can be obtained by reaction of the compound (A) having at least one ionic functional group and at least two functional groups reactive with isocyanate group, the compound (B) having polyoxyethylene units, the organic polyisocyanate (C), and optionally, the active hydrogen compound ($L^1$) containing the polyhydroxy compound described above as the main component thereof, in such amounts that the equivalent ratio of the isocyanate group to the total of the active hydrogen in the compounds (A), (B) and ($L^1$) is 1.02 to 3 / 1, preferably 1.05 to 2.2 / 1. Furthermore, if necessary, another polymer ($P^2$) having terminal isocyanate groups can be obtained by reaction of the polymer ($P^1$) having terminal isocyanate groups with an active hydrogen compound ($L^2$) which is a conventional chain extender in such amounts that the equivalent ratio of the isocyanate group to the active hydrogen in the compound ($L^2$) is 1.02 to 2 / 1, preferably 1.04 to 1.7 / 1.

The aqueous polyurethane having terminal hydrazine functional groups can be obtained by reaction of the polymer having terminal isocyanate groups thus obtained with the polyhydrazine compound (D) in such amounts that the equivalent ratio of the hydrazine group to the terminal isocyanate group is 1.02 to 2 / 1, preferably 1.04 to 1.7 / 1.

When the polymer ($P^1$) having terminal isocyanate groups is brought into reaction with the polyhydrazine compound (D), the active hydrogen compound ($L^2$) may be used additionally. Particularly, because primary diamines have higher reactivities to the isocyanate group than hydrazine groups, hydrazine groups can be left unreacted at the ends when 5 % or more of the polyhydrazine compound (D) is contained in the mixture of the polyhydrazine compound and the active hydrogen compound.

The active hydrogen compound ($L^2$) is selected from the active hydrogen compound ($L^1$) described above. For example, a polyol, such as ethylene glycol or butanediol; a primary or secondary aliphatic, alicyclic, aromatic, aralkyl, or heterocyclic amine, particularly diamine, such as ethylenediamine, diaminodiphenylmethane, isophoronediamine, or piperazin; or water; can be used singly or as a mixture of two or more kinds.

In these reactions, conventional catalysts for urethane formation, such as dibutyl tin dilaurate and tin octoate, can be used if necessary.

The preparation of the polymer having terminal isocyanate groups can be conducted in the absence of a solvent. However, an organic solvent inert to the isocyanate group may also be used for achieving homogeneous reaction and adjusting viscosity.

For dispersing or dissolving the aqueous polyurethane into water, the aqueous polyurethane may be dispersed or dissolved into water according to a conventional method after it is prepared. As another method, the molecular weight of the polymer having terminal isocyanate groups described above may be increased with the chain extender or the like while the polymer is dispersed in water or after the polymer is dispersed in water. Conversion of the ionic functional group, for example carboxyl group, in the polymer described above to an ionic group (a base group) may be conducted either before, at the time of, or after addition of the polymer to water. As the agent used for the neutralization, ammonia, or an alkali metal, is suitable.

The aqueous polyurethane thus obtained can be used without further treatment after it is dispersed in water. However, for the purpose of removing various kinds of organic solvents used together, a process of removing the residual organic solvent by azeotropic distillation with water with heating and evacuating operations is generally adopted.

The present invention relates to aqueous dispersions used for ink, such as printing ink, ink jet ink, and ink for writing tools; coating, such as paint; and adhesive materials. The aqueous ink or coating composition comprises the aqueous dispersion of the aqueous polyurethane, pigments, water, and optionally, water-soluble organic solvents.

Contents of the components of the composition are, for example, as follows. The contents are shown in % by weight based on the weight of the composition.

(a) the aqueous polyurethane in the aqueous dispersion 2 to 40 % by weight
b) pigments 2 to 80 % by weight
(c) the total water 10 to 96 % by weight
(d) a water-soluble organic solvent 0 to 50 % by weight

The adhesive composition comprises, for example, the components (a), (c) and (d) in a similar manner to the composition described above. In other words, the adhesive composition comprises the three components described above except the component (b) in the contents described above.
The pigment used herein includes conventional colored inorganic and organic pigments. The water-soluble organic solvent includes alcohols, ketones, esters, pyrrolidones and ethers.
The aqueous dispersion of the present invention can be used as an emulsifier for polymerization. In this case, a conventional vinyl monomer, such as vinyl acetate, styrene, (meth)acrylic acid esters and (meth)acrylic acid, can be copolymerized in the presence of the aqueous polyurethane of the present invention in water to obtain a urethane-vinyl composite resin. The amount of the aqueous polyurethane used differs in accordance with the application of the resultant composite resin, and is preferably 3 to 90 %.
To the aqueous composition of the present invention, other ingredients can be added if necessary in addition to the pigment and the aqueous organic solvent. Examples of other ingredients include water-insoluble organic solvents, dyestuffs, magnetic powders, fillers, emulsifiers, defoaming agents, surfactants, dispersion co-agents, thickening agents, heat stabilizers, leveling agents, crater preventing agents, precipitation preventing agents, ultraviolet light absorbents, antioxidants and flame retardants. Aqueous dispersions of other aqueous resins, such as polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymer and cellulosic resins, can be additionally used according to the object.
Furthermore, cured coating layers having excellent strength and chemical resistance can be formed by adding conventional crosslinking agents to the aqueous composition of the present invention. For example, when a carboxyl group is incorporated as the ionic functional group, polyaziridine compounds, polyepoxy compounds, polycarbodiimide compounds, metal chelate compounds, polyoxazoline compounds, polyisocyanates, blocked polyisocyanates, partially or totally etherized amino resins can be used as the crosslinking agent. Polycarbonyl compounds including polyacetoacetic acid esters, aqueous resins having an acetoacetate group, and aqueous resins having an aldehyde group or a carbonyl group can be used as the curing agent as well.
The aqueous composition of the present invention can be used as an ink, a coating, an adhesive, a fiber treatment agent, or a surface treatment agent. The resin layer can be formed on a desired substrate including paper, wood, metal, glass, fiber, leather, plastic, a foamed article, and the like by a conventional method, such as printing, coating, impregnating and spraying. Particularly, the resin layer has excellent adhesion to non-polar plastic molded articles and plastic films, such as those made of polyethylene or polypropylene, as well as to polar substrates, such as metal and glass.
Particularly when the aqueous composition of the present invention is used as printing ink, it shows excellent adhesion to various kinds of plastics and is well-suited to laminate processing. These characteristics are lacking in conventional aqueous inks.
The aqueous composition of the present invention can also be used as an emulsifier for polymerization reaction in a resin system or in an aqueous system and also as an adhesive for polyethylene, polypropylene, polyester, nylon, polyurethane or leather. It can be used not only for the adhesion of materials of the same type, but also advantageously for the adhesion of substrates having different polarities.

EXAMPLES

The present invention is described in more detail with reference to the following examples; however, the present invention is not limited by the examples in any way. In the following examples, "part" means part by weight and "%" means % by weight.

Example 1

Into a four-necked flask equipped with a thermometer, a stirrer and a reflux cooler, 67.1 parts of polybutylene adipate glycol (hydroxyl value, 56 mg KOH/g), 7.5 parts of polyethylene glycol (hydroxyl value, 56 mg KOH/g), 14.3 parts of dimethylolpropionic acid and 90 parts of methyl ethyl ketone were charged and heated to 80°C in a nitrogen

atmosphere while being stirred. When the temperature was stabilized, 48.0 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a prepolymer having terminal isocyanate groups. After the reaction solution was cooled to a temperature of 30°C or lower, a solution prepared by mixing 11.5 parts of isophoronediamine and 150 parts of acetone was added dropwise to the reaction solution over 1 hour and allowed to react for 30 minutes at the same temperature to obtain a solution of a polymer containing terminal isocyanate groups and having an increased molecular weight. Then, a solution prepared by mixing 1.5 parts of adipic acid dihydrazide, 25 parts of water and 50 parts of acetone was added dropwise. The reaction solution was heated to 50°C and the reaction was finished. An aqueous dispersion of an aqueous polyurethane was obtained by adding dropwise a solution prepared by mixing 7.2 parts of 25 % aqueous ammonia and 320 parts of water to the reaction solution. The solvents in the resultant aqueous dispersion were in a vacuum at 60°C and an aqueous dispersion of a polyurethane (a) having hydrazine functional groups at the ends and in which 5 % of the units in the polyurethane were polyoxyethylene units in the main chain was obtained. The polyurethane (a) had an acid value of 39.8 mg KOH/g before neutralization, and the aqueous dispersion contained 30.1 % of non-volatile matter and had a pH of 6.8.

Example 2

Into an apparatus similar to that in Example 1, 45.4 parts of poly-ε-caprolactone glycol (hydroxyl value, 56 mg KOH/g), 7.8 parts of polyethylene glycol (hydroxyl value, 56 mg KOH/g), 20.5 parts of dimethylolpropionic acid and 90 parts of methyl ethyl ketone were charged and heated to 80°C in a nitrogen atmosphere while being stirred. When the temperature was stabilized, 59.8 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature. The reaction solution was cooled to a temperature of 30°C or lower and a solution of a polymer having terminal isocyanate groups was obtained. Then, 10.5 parts of 25 % aqueous ammonia, 345 parts of water and 16.5 parts of adipic acid dihydrazide were charged in another apparatus similar to that used above and heated to 30°C in a nitrogen atmosphere while being stirred. When the temperature was stabilized, the solution of the polymer having terminal isocyanate groups prepared above was added dropwise to this solution over 1 hour. The reaction solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (b) having hydrazine functional groups at the ends and in which 5 % of the units in the polyurethane were polyoxyethylene units in the main chain was obtained. The polyurethane (b) had an acid value of 57.2 mg KOH/g before neutralization, and the aqueous dispersion contained 30.2 % of non-volatile matter and had a pH of 6.9.

Example 3

Into an apparatus similar to that in Example 1, 98.6 parts of polytetramethylene glycol (hydroxyl value, 56 mg KOH/g), 15.0 parts of polyethylene glycol (hydroxyl value, 56 mg KOH/g), 6.7 parts of dimethylolpropionic acid and 90 parts of methyl ethyl ketone were charged and heated to 80°C in a nitrogen atmosphere while being stirred. When the temperature was stabilized, 27.9 parts of tolylene diisocyanate (a product of Nippon Polyurethane Co., Ltd.; trade name, TDI-80) was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a polymer having terminal isocyanate groups. After the reaction solution was cooled to a temperature of 30°C or lower, a solution prepared by mixing 2.28 parts of hydrazine monohydrate (an 80 % aqueous solution), 25 parts of water and 200 parts of acetone was added dropwise to the reaction solution over 1 hour. The reaction solution was heated to 50°C and the reaction was finished. An aqueous dispersion of an aqueous polyurethane was obtained by adding dropwise a solution prepared by mixing 3.5 parts of 25 % aqueous ammonia and 325 parts of water to the reaction solution. The solvents in the resultant aqueous dispersion were removed in a vacuum at 60°C and an aqueous dispersion of a polyurethane (c) having hydrazine functional groups at the ends and in which 10 % of the units in the polyurethane were polyoxyethylene units in the main chain was obtained. The polyurethane (c) had an acid value of 18.7 mg KOH/g before neutralization, and the aqueous dispersion contained 30.1 % of non-volatile matter and had a pH of 6.7.

Example 4

Into an apparatus similar to that in Example 1, 6.2 parts of ethylene glycol, 20 part of succinic anhydride and 413.6 parts of polyethylene glycol methyl glycidyl ether (epoxy equivalent, 2068; average number of polyoxyethylene

units contained therein, 45) were charged and dissolved by heating to 100°C. The mixture was stirred for 3 hours at the same temperature. Then, 2 parts of N,N-dimethylbenzylamine as the reaction catalyst was added to the mixture. After the mixture was allowed to react for 7 hours at the same temperature, the acid value was confirmed to be 10 mg KOH/g or lower and a polyester (I) having 96 % of the polyoxyethylene units in the side chains was obtained.

Into another apparatus similar to that used above, 68.9 parts of poly(3-methyl-1,5-pentanediol adipate) (hydroxyl value, 56 mg KOH/g), 7.6 parts of the polyester (I) prepared above, 13.9 parts of dimethylolpropionic acid and 90 parts of methyl ethyl ketone were charged and heated to 80°C in a nitrogen atmosphere while being stirred. When the temperature was stabilized, 46.7 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature. The reaction solution was cooled to a temperature of 30°C or lower and a solution of a polymer containing terminal isocyanate groups was obtained. Then, 7.0 parts of 25 % aqueous ammonia, 345 parts of water and 12.9 parts of adipic acid dihydrazide were charged into still another apparatus similar to that used above and heated to 30°C in a nitrogen atmosphere while being stirred. When the temperature was stabilized, the solution of the polymer containing terminal isocyanate groups prepared above was added dropwise to the solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (d) having hydrazine functional groups at the ends and in which 5 % of the units in the polyurethane were polyoxyethylene units in the side chains was obtained. The polyurethane (d) had an acid value of 39.7 mg KOH/g before neutralization, and the aqueous dispersion contained 30.2 % of non-volatile matter and had a pH of 7.2.

Example 5

Into an apparatus similar to that in Example 1, 201.2 parts of polyethylene glycol monomethyl ether (average number of polyoxyethylene units contained therein, 45; hydroxyl value, 28 mg KOH/g) and 3 parts of potassium hydroxide were charged. The mixture was heated to 120°C and dehydrated in a vacuum. Then, 7.4 parts of glycidol was added slowly and the reaction was allowed to proceed for about 3 hours. After the reaction mixture was cooled, the added potassium hydroxide was neutralized with acetic acid and the salt which formed was removed by filtration. Thus, an addition polymer of an alkylene oxide (II) containing 96 % of polyoxyethylene units and having 2 hydroxyl groups (m = 45, n = 0) was obtained.

Into another apparatus similar to that used above, 104.0 parts of polycarbonate diol (hydroxyl value, 56 mg KOH/g), 7.5 parts of the addition polymer (II) prepared above, 3.6 parts of dimethylolpropionic acid and 90 parts of methyl ethyl ketone were charged and heated to 80°C in a nitrogen atmosphere while being stirred. When the temperature was stabilized, 27.5 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature. The reaction solution was cooled to a temperature of 30°C or lower and a solution of a polymer containing terminal isocyanate groups was obtained. Then, 2.0 parts of 25 % aqueous ammonia, 345 parts of water and 7.6 parts of adipic acid dihydrazide were charged into still another apparatus similar to that used above and heated to 30°C in a nitrogen atmosphere while being stirred. When the temperature was stabilized, the solution of the polymer containing terminal isocyanate groups prepared above was added dropwise to the solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (e) having hydrazine functional groups at the ends and in which 5 % of the units in the polyurethane were polyoxyethylene units in the side chains was obtained. The polyurethane (e) had an acid value of 10.0 mg KOH/g before neutralization, and the aqueous dispersion contained 29.9 % of non-volatile matter and had a pH of 7.5.

Example 6

Into an apparatus similar to that in Example 1, 84.0 parts of poly(3-methyl-1,5-pentanediol terephthalate) (hydroxyl value, 56 mg KOH/g), 7.5 parts of polyethylene glycol (hydroxyl value, 56 mg KOH/g), 7.2 parts of dimethylolpropionic acid and 90 parts of methyl ethyl ketone were charged and heated to 80°C in a nitrogen atmosphere while being stirred. When the temperature was stabilized, 37.2 parts of 4,4'-diphenylmethane diisocyanate thawed by heating to 50°C was added dropwise to the mixture. Then, a solution of 0.015 parts of dibutyltin dilaurate dissolved in 10 parts of methyl ethyl ketone was added and the mixture was allowed to react for 3 hours at the same temperature. The reaction solution was cooled to a temperature of 30°C or lower and a solution of a polymer containing terminal isocyanate groups was obtained. Then, 3.7 parts of 25 % aqueous ammonia, 345 parts of water and 14.6 parts of sebacic acid dihydrazide were charged into another apparatus similar to that used above and heated to 30°C in a nitrogen

atmosphere while being stirred. When the temperature was stabilized, the solution of the polymer containing terminal isocyanate groups prepared above was added dropwise to the solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (f) having hydrazine functional groups at the ends and in which 5 % of the units in the polyurethane were polyoxyethylene units in the main chain was obtained. The polyurethane (f) had an acid value of 20.0 mg KOH/g before neutralization, and the aqueous dispersion contained 30.5 % of non-volatile matter and had a pH of 7.3.

Example 7

Into an apparatus similar to that in Example 1, 95.0 parts of poly(3-methyl-1,5-pentanediol terephthalate adipate) (hydroxyl value, 56 mg KOH/g), 12.0 parts of the addition polymer (II) prepared in Example 5, 3.6 parts of dimethylolpropionic acid and 90 parts of methyl ethyl ketone were charged and heated to 80°C in a nitrogen atmosphere while being stirred. When the temperature was stabilized, 31.5 parts of 4,4'-dicyclohexylmethane diisocyanate thawed by heating to 50°C was added dropwise to the mixture. Then, a solution of 0.015 parts of dibutyltin dilaurate dissolved in 10 parts of methyl ethyl ketone was added and the mixture was allowed to react for 3 hours at the same temperature. The reaction solution was cooled to a temperature of 30°C or lower and a solution of a polymer containing terminal isocyanate groups was obtained. Then, 2.0 parts of 25 % aqueous ammonia, 345 parts of water and 7.9 parts of isophthalic acid dihydrazide were charged into another apparatus similar to that used above and heated to 30°C in a nitrogen atmosphere while being stirred. When the temperature was stabilized, the solution of the polymer containing terminal isocyanate groups prepared above was added dropwise to the solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (g) having hydrazine functional groups at the ends and in which 8 % of the units in the polyurethane were polyoxyethylene units in the side chains was obtained. The polyurethane (g) had an acid value of 10.3 mg KOH/g before neutralization, and the aqueous dispersion contained 30.2 % of non-volatile matter and had a pH of 7.8.

Comparative Example 1

Into an apparatus similar to that in Example 1, 67.4 parts of polybutylene adipate glycol (hydroxyl value, 56 mg KOH/g), 7.5 parts of polyethylene glycol (hydroxyl value, 56 mg KOH/g), 14.3 parts of dimethylolpropionic acid and 90 parts of methyl ethyl ketone were charged and heated to 80°C in a nitrogen atmosphere while being stirred. When the temperature was stabilized, 48.1 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a polymer containing terminal isocyanate groups. The reaction solution was cooled to a temperature of 30°C or lower. Then, a solution prepared by mixing 11.5 parts of isophorone diamine, 1.1 parts of dibutylamine and 200 parts of acetone was added dropwise to the reaction solution over 1 hour. The solution was heated to 50°C and the reaction was finished. Then, a solution prepared by mixing 5.5 parts of 25 % aqueous ammonia and 345 parts of water was added dropwise to obtain an aqueous dispersion of an aqueous polyurethane. The solvents in the resultant aqueous dispersion were removed in a vacuum at 60°C and an aqueous dispersion of a polyurethane (h) having hydrocarbon groups at the ends and in which 5 % of the units in the polyurethane were polyoxyethylene units in the main chain was obtained. The polyurethane (h) had an acid value of 40.4 mg KOH/g before neutralization, and the aqueous dispersion contained 29.7 % of non-volatile matter and had a pH of 7.0.

Comparative Example 2

Into an apparatus similar to that in Example 1, 67.1 parts of polybutylene adipate glycol (hydroxyl value, 56 mg KOH/g), 7.5 parts of polyethylene glycol (hydroxyl value, 56 mg KOH/g), 14.3 parts of dimethylolpropionic acid and 90 parts of methyl ethyl ketone were charged and heated to 80°C in a nitrogen atmosphere while being stirred. When the temperature was stabilized, 48.0 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a polymer containing terminal isocyanate groups. The reaction solution was cooled to a temperature of 30°C or lower. Then, a solution prepared by mixing 13.0 parts of isophoronediamine, 25 parts of water and 200 parts of acetone was added dropwise to the reaction solution over 1 hour. The solution was heated to 50°C and the reaction was finished. Then, a solution prepared by mixing 7.2 parts of 25 % aqueous ammonia and 320 parts of water was added dropwise to obtain an aqueous dispersion of an aqueous polyurethane. The solvents in the resultant aqueous dispersion were removed in a vacuum at 60°C and an

aqueous dispersion of a polyurethane (i) having amino groups at the ends and in which 5 % of the units in the polyurethane were polyoxyethylene units in the main chain was obtained. The polyurethane (i) had an acid value of 39.7 mg KOH/g before neutralization, and the aqueous dispersion contained 29.9 % of non-volatile matter and had a pH of 6.9.

Comparative Example 3

Into an apparatus similar to that in Example 1, 67.7 parts of polybutylene adipate glycol (hydroxyl value, 56 mg KOH/g), 7.5 parts of polyethylene glycol (hydroxyl value, 56 mg KOH/g), 14.3 parts of dimethylolpropionic acid and 90 parts of methyl ethyl ketone were charged and heated to 80°C in a nitrogen atmosphere while being stirred. When the temperature was stabilized, 48.1 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a polymer containing terminal isocyanate groups. The reaction solution was cooled to a temperature of 30°C or lower. Then, a solution prepared by mixing 11.6 parts of isophoronediamine and 150 parts of acetone was added dropwise to the reaction solution over 1 hour and the reaction mixture was allowed to react for 30 more minutes at the same temperature. A solution prepared by mixing 0.78 parts of 1,4-butanediol, 25 parts of water and 50 parts of acetone was added dropwise to the reaction solution. The solution was heated to 50°C and the reaction was finished. Then, a solution prepared by mixing 7.2 parts of 25 % aqueous ammonia and 320 parts of water was added dropwise to obtain an aqueous dispersion of an aqueous polyurethane. The solvents in the resultant aqueous dispersion were removed in a vacuum at 60°C and an aqueous dispersion of a polyurethane (j) having hydroxyl groups at the ends and in which 5 % of the units in the polyurethane were polyoxyethylene units in the main chain was obtained. The polyurethane (j) had an acid value of 39.8 mg KOH/g before neutralization, and the aqueous dispersion contained 30.1 % of non-volatile matter and had a pH of 6.8.

Comparative Example 4

Into an apparatus similar to that in Example 1, 76.1 parts of polytetramethylene glycol (hydroxyl value, 56 mg KOH/g), 37.5 parts of polyethylene glycol (hydroxyl value, 56 mg KOH/g), 6.7 parts of dimethylolpropionic acid and 90 parts of methyl ethyl ketone were charged and heated to 80°C in a nitrogen atmosphere while being stirred. When the temperature was stabilized, 27.9 parts of tolylene diisocyanate (a product of Nippon Polyurethane Co., Ltd.; trade name, TDI-80) was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a polymer containing terminal isocyanate groups. The reaction solution was cooled to a temperature of 30°C or lower. Then, a solution prepared by mixing 2.28 parts of hydrazine monohydrate (an 80 % aqueous solution), 25 parts of water and 200 parts of acetone was added dropwise to the reaction solution over 1 hour. The solution was heated to 50°C and the reaction was finished. Then, a solution prepared by mixing 3.4 parts of 25 % aqueous ammonia and 325 parts of water was added dropwise to obtain an aqueous dispersion of an aqueous polyurethane. The solvents in the resultant aqueous dispersion were removed in a vacuum at 60°C and an aqueous dispersion of a polyurethane (k) having hydrazine functional groups at the ends and in which 25 % of the units in the polyurethane were polyoxyethylene units in the main chain was obtained. The polyurethane (k) had an acid value of 18.7 mg KOH/g before neutralization, and the aqueous dispersion contained 30.1 % of non-volatile matter and had a pH of 6.7.

Comparative Example 5

Into an apparatus similar to that in Example 1, 112.7 parts of polybutylene adipate glycol (hydroxyl value, 56 mg KOH/g), 7.5 parts of polyethylene glycol (hydroxyl value, 56 mg KOH/g), 0.64 parts of dimethylolpropionic acid and 90 parts of methyl ethyl ketone were charged and heated to 80°C in a nitrogen atmosphere while being stirred. When the temperature was stabilized, 21.6 parts of isophorone diisocyanate was added dropwise to the mixture. Then, a solution of 0.015 parts of dibutyltin dilaurate dissolved in 10 parts of methyl ethyl ketone was added and the mixture was allowed to react for 3 hours at the same temperature to obtain a solution of a prepolymer containing terminal isocyanate groups. The reaction solution was cooled to a temperature of 30°C or lower. Then, a solution prepared by mixing 6.6 parts of isophoronediamine and 150 parts of acetone was added dropwise to the reaction solution over 1 hour. The reaction solution was allowed to react for 30 more minutes at the same temperature to obtain a solution containing the polymer having terminal isocyanate groups with an increased molecular weight. Then, a solution prepared by mixing 0.9 parts of adipic acid dihydrazide, 25 parts of water and 50 parts of acetone was added dropwise into the reaction solution. The solution was heated to 50°C and the reaction was finished. Then, a solution prepared by mixing 7.2 parts of 25 % aqueous ammonia and 320 parts of water was added dropwise to obtain an aqueous

dispersion of an aqueous polyurethane. The solvents in the resultant aqueous dispersion were removed in a vacuum at 60°C and an aqueous dispersion of a polyurethane (1) having hydrazine functional groups at the ends and in which 5 % of the units in the polyurethane were polyoxyethylene units in the main chain was obtained. The polyurethane (1) had an acid value of 1.8 mg KOH/g before neutralization, and the aqueous dispersion contained 30.3 % of non-volatile matter and had a pH of 7.0. Precipitates formed in the aqueous dispersion prepared above after a month at room temperature. The aqueous dispersion had inferior storage stability.

Comparative Example 6

Into an apparatus similar to that in Example 1, 23.9 parts of polybutylene adipate glycol (hydroxyl value, 56 mg KOH/g), 7.5 parts of polyethylene glycol (hydroxyl value, 56 mg KOH/g), 40.0 parts of dimethylolpropionic acid and 90 parts of methyl ethyl ketone were charged and heated to 80°C in a nitrogen atmosphere while being stirred. When the temperature was stabilized, 73.2 parts of isophorone diisocyanate was added dropwise to the mixture. Then, a solution of 0.015 parts of dibutyltin dilaurate dissolved in 10 parts of methyl ethyl ketone was added and the mixture was allowed to react for 5 hours at the same temperature. The reaction solution was cooled to a temperature of 30°C or lower to obtain a solution of a polymer containing terminal isocyanate groups. Then, a solution prepared by mixing 20.5 parts of 25 % aqueous ammonia, 332 parts of water and 5.4 parts of adipic acid dihydrazide was added dropwise to the reaction solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (m) having hydrazine functional groups at the ends and in which 5 % of the units in the polyurethane were in the polyoxyethylene units in the main chain was obtained. The polyurethane (m) had an acid value of 112 mg KOH/g before neutralization, and the aqueous dispersion contained 30.2 % of non-volatile matter and had a pH of 7.2.

Comparative Example 7

Into an apparatus similar to that in Example 1, 88.0 parts of poly(3-methyl-1,5-pentanediol terephthalate) (hydroxyl value, 56 mg KOH/g), 7.5 parts of polyethylene glycol (hydroxyl value, 56 mg KOH/g), 7.2 parts of dimethylolpropionic acid and 90 parts of methyl ethyl ketone were charged and heated to 80°C in a nitrogen atmosphere while being stirred. When the temperature was stabilized, 38.0 parts of 4,4'-diphenylmethane diisocyanate thawed in advance at 50°C was added dropwise to the mixture. Then, a solution of 0.015 parts of dibutyltin dilaurate dissolved in 10 parts of methyl ethyl ketone was added and the mixture was allowed to react for 5 hours at the same temperature. The reaction solution was cooled to a temperature of 30°C or lower to obtain a solution of a polymer containing terminal isocyanate groups. Then, a solution prepared by mixing 3.7 parts of 25 % aqueous ammonia, 332 parts of water and 9.1 parts of isophoronediamine was added dropwise to the reaction solution over 1 hour. The solution was heated to 50°C and the reaction was finished to obtain an aqueous dispersion of an aqueous polyurethane. The solvents in the resultant aqueous dispersion were removed in a vacuum at 60°C and an aqueous dispersion of a polyurethane (n) having amino groups at the ends and in which 5 % of the units in the polyurethane were polyoxyethylene units in the main chain was obtained. The polyurethane (n) had an acid value of 20 mg KOH/g before neutralization, and the aqueous dispersion contained 30.1 % of non-volatile matter and had a pH of 7.5.

The contents of the ionic functional group and the polyoxyethylene (EO) unit and the type of the end group in the polyurethane obtained in Examples 1 to 7 and Comparative Examples 1 to 7 are shown in Table 1.

Table 1

| Molecular structure of the polyurethanes | | | | |
|---|---|---|---|---|
| | polyurethane resin No. | content of EO unit (% by wt.) | content of ionic functional group (milliequiv./100g resin) | end group |
| Example 1 | (a) | 5 (main chain) | 71 | hydrazine group |
| Example 2 | (b) | 5 (main chain) | 102 | hydrazine group |
| Example 3 | (c) | 10 (main chain) | 33 | hydrazine group |
| Example 4 | (d) | 5 (side chain) | 69 | hydrazine group |
| Example 5 | (e) | 5 (side chain) | 18 | hydrazine group |
| Example 6 | (f) | 5 (main chain) | 36 | hydrazine group |
| Example 7 | (g) | 8 (side chain) | 18 | hydrazine group |

Table 1 (continued)

| Molecular structure of the polyurethanes | | | | |
|---|---|---|---|---|
| | polyurethane resin No. | content of EO unit (% by wt.) | content of ionic functional group (milliequiv./100g resin) | end group |
| Comparative Example 1 | (h) | 5 (main chain) | 71 | hydrocarbon group |
| Comparative Example 2 | (i) | 5 (main chain) | 71 | amino group |
| Comparative Example 3 | (j) | 5 (main chain) | 71 | hydroxyl group |
| Comparative Example 4 | (k) | 25 (main chain) | 33 | hydrazine group |
| Comparative Example 5 | (l) | 5 (main chain) | 3 | hydrazine group |
| Comparative Example 6 | (m) | 5 (main chain) | 199 | hydrazine group |
| Comparative Example 7 | (n) | 5 (main chain) | 36 | amino group |

Examples 8 to 10

Aqueous printing ink was prepared by a conventional method according to the formulation shown below by using the aqueous dispersions of the polyurethane resins (a), (b) and (d) obtained in Examples 1, 2 and 4, respectively. The compositions were diluted with a mixed solvent of water/isopropanol = 1/1 in such a manner that each composition showed a viscosity of 18 seconds (25°C) with a Zahn cup (a product of Rigosha Co., Ltd.). The diluted compositions were printed on a polyester film (PET) (a product of TOYOBO Co., Ltd.; Ester E5100; thickness, 12 μm) treated with corona discharge and a polypropylene film (OPP) (a product of TOYOBO Co., Ltd.; Pylen P2161; thickness 20 μm) treated with corona discharge. Printing was effected on the surface treated with corona discharge by using a gravure form plate having plate depth of 25 μm at the drying temperature of 60°C and at the printing speed of 80 m/minute. Each sample was evaluated with respect to adhesion, strength of the extrusion laminate, and coloring property which illustrates the degree of pigment dispersibility.

| | |
|---|---|
| aqueous polyurethane resin/water dispersion | 21 parts/49 parts |
| phthalocyanine blue pigment (a product of Toyo Ink Mfg. Co., Ltd.; Lionol Blue KLH) | 18 parts |
| water | 6.9 parts |
| (total water | 55.9 parts) |
| isopropyl alcohol | 5 parts |
| silicone defoaming agent<br>(a product of Toray Silicone Co., Ltd.; Toray Silicone SC5540) | 0.1 parts |

Results of the evaluation are shown in Table 2. The evaluations were made in accordance with the following methods.

Coloring test: The appearance of the printed product was visually observed, and based on the evaluations of density, gloss and transparency, a total evaluation was made and one of the following marks was awarded:

5 grades:
- 5: excellent
- 4: good
- 3: fair
- 2: poor
- 1: very poor

Adhesion test: After the printed product was left standing for 1 day, cellophane tape was adhered to the printed surface and then peeled rapidly. The condition of the printed layer after peeling was evaluated by visual observation of the appearance of the layer, and one of the following marks was awarded:

5 grades:
- 5: 100 % remaining
- 4: 80 to 100 % remaining
- 3: 50 to 80 % remaining
- 2: 30 to 50 % remaining
- 1: 30 % or less remaining

Extrusion laminate test: Melt polyethylene was laminated to the printed product by using a polyethyleneimine anchor coating agent with a extrusion laminator. A 15 mm wide sample was cut from the prepared laminate 2 days after the laminate had been prepared. T-type peeling strength was measured for the sample.

Comparative Examples 8 to 13

Using the aqueous dispersions of the polyurethane resins (h) to (m) obtained in Comparative Examples 1 to 6, respectively, aqueous printing ink compositions were prepared and evaluated in accordance with the same method as that in Examples 8 to 10. Results of the evaluation are shown in Table 2.

Table 2

| Results of evaluation of aqueous printing ink compositions | | | | | | |
|---|---|---|---|---|---|---|
| | polyurethane resin No. | coloring property | adhesion | | laminate strength (g/15 mm) | |
| | | | OPP | PET | OPP | PET |
| Example 8 | (a) | 4 | 5 | 5 | 120 | 160 |
| Example 9 | (b) | 4 | 5 | 5 | 110 | 150 |
| Example 10 | (d) | 4 | 5 | 5 | 130 | 180 |
| Comparative Example 8 | (h) | 4 | 1 | 5 | 20 | 120 |
| Comparative Example 9 | (i) | 4 | 1 | 5 | 30 | 140 |
| Comparative Example 10 | (j) | 4 | 1 | 5 | 20 | 130 |
| Comparative Example 11 | (k) | 3 | 4 | 4 | 50 | 80 |
| Comparative Example 12 | (l) | 2 | 5 | 5 | 180 | 200 |
| Comparative Example 13 | (m) | 5 | 3 | 3 | 50 | 40 |

As shown in Table 2, the aqueous printing ink compositions containing the aqueous polyurethanes of the present invention show excellent dispersibility of pigment, superior adhesion to various kinds of substrates, and outstanding processability in the lamination.

Examples 11 and 12

Using the aqueous dispersions containing the polyurethane resins (c) and (e) obtained in Examples 3 and 5, respectively, the following components were mixed by stirring and then kneaded for 20 hours using a ball mill to prepare aqueous white coating compositions.

| | |
|---|---|
| aqueous polyurethane resin / water dispersion | 15 parts/35 parts |
| titanium oxide pigment (a product of Ishihara Sangyo Co., Ltd.; Tipaque R-930) | 35 parts |
| water | 10 parts |

(continued)

| | |
|---|---|
| (total water | 45 parts) |
| isopropyl alcohol | 5 parts |

Each aqueous white coating composition thus prepared was coated on the following three types of substrates by using a bar coater in such a manner that the dry thickness of the coating layer was 10 µm. After the solvents were removed by vaporization at 70°C for 5 minutes, dry coating layers were formed.

Substrates: molded plate of polyethylene (PE)
plate of polycarbonate (PC)
plate of aluminum (Al)

Comparative Example 14

Using the aqueous dispersion of the polyurethane resin (i) obtained in Comparative Example 2, dry coating layers were prepared and evaluated in accordance with the same method as that in Examples 11 and 12.
Tests of water resistance, adhesion and gloss were conducted for the coating layers obtained in Examples 11 and 12 and Comparative Example 14 in accordance with the following methods. Results of the evaluation are shown in Table 3.

Water resistance: The coating layer was rubbed repeatedly with a cotton stick which was wet with water. The number of times the coating layer was rubbed was counted, and the number of the rubbing when the coating layer was peeled was recorded.
Adhesion test: A grid peeling test of the coating layer was conducted with cellophane tape. The number of grids on which the coating layer remained per the original number of grids (%) was counted.
Gloss test: Gloss was measured with a glossmeter, and light intensity of 60 degree reflection (%) was obtained.

Table 3

Results of evaluation of the aqueous coating compositions

| | polyurethane resin No. | water resistance | adhesion | | | gloss |
|---|---|---|---|---|---|---|
| | | | PE plate | PC plate | Al plate | |
| Example 11 | (c) | 50 or more | 100 | 100 | 100 | 75 |
| Example 12 | (e) | 50 or more | 100 | 100 | 100 | 84 |
| Comparative Example 14 | (i) | 50 or more | 10 | 100 | 80 | 34 |

As shown in Table 3, the aqueous coating compositions containing aqueous dispersions of the present invention show excellent water resistance, superior adhesion to various kinds of substrates, and outstanding gloss. The excellent gloss signifies excellent dispersibility of pigments. In particular, the aqueous coating compositions containing the aqueous dispersion of the present invention show excellent adhesion to both polar and non-polar substrates.

Examples 13 and 14

A polyester resin (III) having carboxylate used in the formulation of the aqueous polyurethane resin of the present invention was prepared according to the following method.
Into an apparatus similar to that in Example 1, 500 parts of isophthalic acid, 290 parts of adipic acid, 90 parts of ethylene glycol, 210 parts of neopentyl glycol and 300 parts of 1,6-hexanediol were charged and heated to 160 to 240°C in a nitrogen atmosphere while being stirred, and the esterification reaction was carried out. When the acid value reached 15 mg KOH/g or less, the pressure was gradually reduced. Polymerization was conducted at 1 mmHg or less at 240°C for 2 hours to obtain a polyester resin containing hydroxyl group and having an acid value of 0.5 mg KOH/g and a hydroxyl value of 12.0 mg KOH/g. To 600 parts of the resultant polyester resin, 24 parts of trimellitic anhydride was added and the reaction was allowed to proceed for 2 hours at 180°C to obtain a polyester resin having carboxyl groups at the molecular ends (acid value, 23 mg KOH/g). Then, after 100 parts of the polyester resin was dissolved in 100 parts of isopropyl alcohol, a solution obtained by mixing 100 parts of water and 17.4 parts of 25 %

aqueous ammonia was added slowly while the mixture was stirred to obtain an aqueous dispersion. The solvents in the resultant aqueous dispersion were removed in a vacuum at 60°C and an aqueous dispersion of the polyester resin (III) containing carboxylate was obtained. The aqueous dispersion contained 50.3 % of non-volatile matter and had a pH of 7.3.

Using the polyurethane resins (f) and (g) obtained in Examples 6 and 7, respectively, aqueous adhesive compositions were prepared according to the following formulation.

| | |
|---|---|
| aqueous polyurethane resin/water dispersion | 30 parts/70 parts |
| polyester resin (III)/water dispersion | 10 parts/10 parts |
| polyethyleneimine crosslinking agent (a product of Nippon Shokubai Co., Ltd.; Chemitite PZ-33) | 3 parts |
| isopropyl alcohol | 20 parts |
| water | 70 parts |
| (total water | 150 parts) |

Composite laminate materials of nylon film / aluminum foil / unstretched polypropylene film were prepared by using the two types of aqueous adhesive composition, and were evaluated with respect to adhesion, heat resistance and resistance to foods. The test methods were as follows.

Peeling test:

| | |
|---|---|
| Substrate: | nylon film (thickness, 15 μm), aluminum foil (thickness, 9 μm) and unstretched polypropylene film (thickness, 70 μm) |
| Amount of coating of the aqueous adhesive composition: | 4 to 5 $g/m^2$ |
| Curing condition: | 40°C/1 day |
| Testing sample: | Each aqueous adhesive composition was coated on the nylon film by using a dry laminator. After the solvents were removed by vaporization, the coated film was adhered to the surface of aluminum foil. The same aqueous adhesive composition was coated on the other side of the aluminum foil by using a dry laminator. After the solvents were removed by vaporization, the surface of the aluminum foil coated with the adhesive composition was adhered to the unstretched polypropylene film and the adhesive composition was cured. The testing sample prepared above was cut to a size of 200 mm × 25 mm and a T-type peeling test was conducted for this sample by using a tensile tester at the extension speed of 300 mm/minute according to ASTM D1876-61. The peeling strength (kg/25 mm width) between the unstretched polypropylene film and the aluminum foil was measured and the average of data from 10 testing samples was recorded. |

Test for heat resistance and resistance to foods:

A bag was readied by placing therein a laminate having a multi-layer structure of nylon film / adhesive / aluminum foil / adhesive / unstretched polypropylene film, which was prepared according to the same method as that for preparing the testing sample used in the peeling test. The bag was packed with meat sauce. After the packed bag was treated with hot water sterilization at 135°C for 30 minutes (retorting treatment), the peeling strength (kg/25 mm width) between the unstretched polypropylene film and the aluminum foil was measured.

Results of the evaluation are shown in Table 4.

Comparative Example 15

Using the polyurethane resin (n) obtained in Comparative Example 7, an aqueous adhesive composition was prepared by the same formulation as that in Examples 13 and 14 and was evaluated according to the same method as that in Examples 13 and 14. Results of the evaluation are shown in Table 4.

Table 4

| Result of evaluation of aqueous adhesive compositions | | | |
|---|---|---|---|
| | polyurethane resin No. | peeling strength (kg/25 mm width) | |
| | | before retorting | after retorting |
| Example 13 | (f) | 1.3 | 1.1 |
| Example 14 | (g) | 1.6 | 1.4 |
| Comparative Example 15 | (n) | 0.8 | 0.6 |

As shown in Table 4, the aqueous adhesive compositions containing the aqueous polyurethane of the present invention show excellent adhesion when laminated to different kinds of substrates and excellent resistance to hot water.

## Claims

**1.** An aqueous dispersion of an aqueous polyurethane obtained by reacting:

(1) polymer ($P^1$) having terminal isocyanate groups and obtained by the reaction of:

compound (A) having at least two functional groups which are reactive with isocyanate groups, and having at least one ionic functional group selected from quaternary ammonium, tertiary amino, carboxylate, carboxyl, sulfonate, sulfonic acid, phosphonium, phosphonic acid, sulfuric acid ester and mixtures of these groups;
compound (B) having polyoxyethylene units and hydroxyl groups and
compound (C) having isocyanate groups in a molar ratio of 1.02-3/1 of isocyanate groups to the total number of active hydrogen groups of the compounds (A) (B),

and

(2) compound (D) which is carboxylic acid dihydrazide or carboxylic acid polyhydrazide,

in amounts such that the equivalent ratio of the hydrazine groups of the compound (D) to the terminal isocyanate group of polymer ($P^1$) is 1.02 to 2/1,
which aqueous plyurethane carries terminal hydrazine groups, 5-180 milliequivalents ionic groups per 100g of the aqueous polyurethane, and up to 20% polyoxyethylene units based on the weight of the aqueous polyurethane.

**2.** An aqueous dispersion according to claim 1, wherein the polymer ($P^1$) is obtained by the reaction of:

the compound (A);
the compound (B);
the compound (C); and further
an active hydrogen compound ($L^1$) which is other than the compound (a) or the compound (B), wherein
said compound (C) has isocyanate groups in a molar ratio of 1.02-3/1 of isocyanate groups tot he total number of the active hydrogen in the compound (A), (B) and ($L^1$).

**3.** An aqueous dispersion according to claim 2, wherein the polymer ($P^1$) obtained by the reaction of the compound (A), the compound (B), the compound ($L^1$) and the compound (C) is further reacted with an active hydrogen compound ($L^2$) which is other than the compound (A) or the compound (B), wherein the ratio of isocyanate groups of the polymer ($P^1$) tot he active hydrogen groups of the additional compound ($L^2$) is 1.02-2/1.

**4.** An aqueous dispersion according to claim 1, wherein the polymer ($P^1$) obtained by the reaction of the compound

(A), the compound (B) and the compound (C) is further reacted with an active hydrogen compound ($L^2$) which is other than the compound (A) or the compound (B), wherein the ratio of isocyanate groups of the polymer ($P^1$) to the active hydrogen groups of the additional compound ($L^2$) is 1.02-2/1.

**5.** An aqueous dispersion according to any of claims 1 to 4, wherein compounds (A) are selected from dimethylolpropionic acid, amino acids, aminosulfonic acids, oxalkylation and polyesterification products of these compounds, diaminocarboxylic acids, sodium diaminobenzene sulfonate, glycerol monophosphate disodiumsalt, sodium hydroxyethylphosphonate, sodium dimethylolphosphinate, N-methylethanolamine, polyesterpolyols having units of sodium 5-sulfoisophthalate and polyesterpolyols containing carboxyl groups obtained by an addition-condensation reaction of glycol with aliphatic or aromatic polybasic anhydride.

**6.** An aqueous dispersion according to one of the preceding claims, wherein compound (B) is selected from polyethylene glycol, polyethylene glycol-polypropylene glycol copolymer and monoalcohols, which are monoalkylethers of these diols.

**7.** An aqueous dispersion according to claim 6, wherein compounds (B) having polyoxyethylene units are polyester obtained by reaction of organic compounds having two hydroxyl groups, cyclic acid anhydrides and monomers having one epoxy group and polyoxyethylene units.

**8.** An aqueous dispersion according to claim 6, wherein compound (B) having polyoxyethylene units is a poly(alkylene oxide)polymer, which is represented by the general formula:

$$X\text{-}(O\text{-}C_2H_4)_m\text{-}(O\text{-}Y)_nOCH_2CH(OH)CH_2OH,$$

wherein X indicates a hydrocarbon group of 1 to 4 carbon atoms, Y indicates a hydrocarbon group of 3 to 8 carbon atoms, m indicates an integer of 1 to 100, and n indicates a positive integer equal to or smaller than m.

**9.** An aqueous dispersion according to claim 7, wherein the organic compound having two hydroxyl groups is selected from ethylene glycol, propylene glycol, 1,4-butylene glycol, hexane diol, cyclohexane dimethanol, bisphenol A, diethylene glycol, polyether glycols like polyethylene glycol, polytetramethylene glycol, polyester diols, polycarbonate diols, and mixtures of these diols.

**10.** An aqueous dispersion according to claim 7, wherein in the cyclic acid anhydride is selected from maleic anhydride, succinic anhydride, itaconic anhydride, 1,2-cyclohexane dicarboxylic acid anhydride, aromatic dicarboxylic acid anhydrides, phthalic anhydride, tetrabromophthalic anhydride, dichlorophthalic anhydride, heterocyclic dicarboxylic acid anhydrides, and mixtures of these anhydrides.

**11.** An aqueous dispersion according to claim 7, wherein the monomer having one epoxy-group and polyoxyethylene units is represented by the general formula:

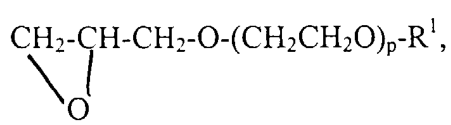

wherein p indicates an integer of 1 to 100, $R^1$ is selected from a saturated or unsaturated alkyl group, an aryl group, a hetero-ring group and a polypropylene oxide group with one of these groups at its end.

**12.** An aqueous dispersion according to claim 11, wherein the substituent $R^1$ is substituted with a halogen atom.

**13.** An aqueous dispersion according to claim 11 or 12, wherein the monomer having one epoxy group and polyoxyethylene units is selected from polyethylene glycol methyl glycidyl-ether, polyethylene glycol phenyl glycidylether, butylglycidylether of polyethylene glycol-polypropylene glycol copolymer.

**14.** An aqueous dispersion according to claim 3 or 4, wherein compound $L^1$ and $L^2$ is selected among water, ethylene

glycol, butanediol, propanediol, 1,6 hexanediol, neopentyl glycol, cyclohexane-dimethanol, trimethylol propane, glycerol, pentaerythritol, polyether diol and polyester diol, bisphenol A, bisphenol F.

**15.** An aqueous dispersion according to one of the preceding claims, wherein compound (C) is selected from tolylene diisocyanate, 4,4-diphenylmethane diisocyanate, hexamethylene diisocyanate, xylylene diisocyanate, 1,5-naphthalene diisocyanate, isophorone diisocyanate, lysine diisocyanate, hydrogenated 4,4-diphenylmethane diisocyanate, hydrogenated tolylene diisocyanate, adducts having isocyanates at both ends formed from glycols or diamines and these diisocyanates, mixtures of these compounds, triphenylmethane triisocyanate and polymethylene polyvinylisocyanate.

**16.** An aqueous dispersion according to one of the preceding claims, wherein compound (D) is selected from hydrazine, oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide, phthalic acid dihydrazide, carbonic acid dihydrazides, carbodihydrazides, thiocarbodihydrazides, 4,4'-oxybisbenzenesulfonyl hydrazide and polyacrylic acid hydrazide.

**17.** An ink or coating composition comprising the aqueous dispersion according to one of the preceding claims at 2 to 40 % by weight,

2 to 80 % by weight pigment,

10 to 96 % by weight water, and

0 to 50 % by weight water soluble organic solvent.

**18.** An adhesive composition comprising the aqueous dispersion according to one of the preceding claims at 2 to 40 % by weight,

water at 10 to 96 % by weight and

0 to 50 % by weight water soluble organic solvent.

**Patentansprüche**

**1.** Wässrige Dispersion eines wässrigen Polyurethans, erhalten durch Umsetzen von:

(1) Polymer ($P^1$), das endständige Isocyanatgruppen aufweist und erhalten ist durch Reaktion von:

Verbindung (A) mit wenigstens zwei funktionellen Gruppen, die mit Isocyanatgruppen reaktiv sind und mit wenigstens einer ionischen funktionellen Gruppe, die unter quartärem Ammonium, tertiärem Amino, Carboxylat, Carboxyl, Sulfonat, Sulfonsäure, Phosphonium, Phosphinsäure, Schwefelsäureester und Mischungen dieser Gruppen ausgewählt sind;

Verbindung (B), die Polyoxyethylen-Einheiten und Hydroxylgruppen aufweist und

Verbindung (C), die Isocyanat-Gruppen in einem molaren Verhältnis von 1,02 - 3/1 an Isocyanatgruppen zur Gesamtzahl aktiver Wasserstoffgruppen der Verbindungen (A), (B) aufweist,

und

(2) Verbindung (D), die Carboxylsäuredihydrazid oder Carboxylsäurepolyhydrazid ist, in solchen Mengen, daß das Gleichgewichtsverhältnis der Hydrazingruppen der Verbindung (D) zu den endständigen Isocyanatgruppen von Polymer ($P^1$) 1,02 bis 2/1 beträgt,

wobei das wässrige Polyurethan endständige Hydrazingruppen trägt, 5 - 180 Milliäquivalente ionischer Gruppen pro 100 g des wässrigen Polyurethans und bis zu 20 % Polyoxyethylen-Einheiten auf Basis des Gewichtes des wässrigen Polyurethans.

**2.** Wässrige Dispersion gemäß Anspruch 1, bei der das Polymer ($P^1$) erhalten wird durch die Reaktion von:

der Verbindung (A);

der Verbindung (B);

der Verbindung (C); und weiterhin

einer aktiven Wasserstoffverbindung ($L^1$), die eine andere als die Verbindung (A) oder die Verbindung (B) ist, wobei die Verbindung (C) Isocyanatgruppen in einem molaren Verhältnis von 1,02 - 3/1 an Isocyanatgruppen zu der Gesamtzahl der aktiven Wasserstoffe in den Verbindungen (A), (B) und ($L^1$) aufweist.

**3.** Wässrige Dispersion gemäß Anspruch 2, bei der das Polymer ($P^1$), erhalten durch Reaktion der Verbindung (A), der Verbindung (B), der Verbindung ($L^1$) und der Verbindung (C) weiterhin mit der aktiven Wasserstoffverbindung ($L^2$) umgesetzt wird, die eine andere als die Verbindung (A) oder die Verbindung (B) ist, wobei das Verhältnis der Isocyanatgruppen des Polymers ($P^1$) zu den aktiven Wasserstoffgruppen der zusätzlichen Verbindung ($L^2$) 1,02 - 2/1 beträgt.

**4.** Wässrige Dispersion gemäß Anspruch 1, bei der das Polymer ($P^1$), erhalten durch Reaktion der Verbindung (A), der Verbindung (B) und der Verbindung (C) weiterhin mit einer aktiven Wasserstoffverbindung ($L^2$) umgesetzt wird, die eine andere als die Verbindung (A) oder die Verbindung (B) ist, wobei das Verhältnis der Isocyanatgruppen des Polymers ($P^1$) zu den aktiven Wasserstoffgruppen der zusätzlichen Verbindung ($L^2$) 1,02 - 2/1 beträgt.

**5.** Wässrige Dispersion gemäß einem der Ansprüche 1 bis 4, bei der die Verbindungen (A) unter Dimethylolpropionsäure, Aminosäuren, Aminosulfonsäuren, Oxalkylierungs- und Polyveresterungsprodukten dieser Verbindungen, Diaminocarboxylsäuren, Natriumdiaminobenzolsulfonat, Glycerinmonophosphat als Dinatriumsalz, Natriumhydroxyethylphosphonat, Natriumdimethylolphosphinat, N-Methylethanolamin, Polyesterpolyolen, die Einheiten aus Natrium-5-sulfoisophthalat aufweisen, und Polyesterpolyolen, die Carboxylgruppen enthalten, die durch eine Additions-Kondensationsreaktion von Glycol mit aliphatischem oder aromatischem polybasischem Anhydrid erhalten sind, ausgewählt sind.

**6.** Wässrige Dispersion gemäß einem der vorangehenden Ansprüche, bei der die Verbindung (B) unter Polyethylenglycol, Polyethylenglycol-Polypropylenglycol-Copolymer und Monoalkoholen, die Monoalkylether dieser Diole sind, ausgewählt ist.

**7.** Wässrige Dispersion gemäß Anspruch 6, bei der die Verbindung (B) mit Polyoxyethylen-Einheiten Polyester sind, die durch Reaktion organischer Verbindungen mit zwei Hydroxylgruppen, zyklischen Säureanhydriden und Monomeren mit einer Epoxygruppe und Polyoxyethylen-Einheiten erhalten sind.

**8.** Wässrige Dispersion gemäß Anspruch 6, bei der die Verbindung (B) mit Polyoxyethylen-Einheiten ein Poly(alkylenoxid)polymer ist, das von der folgenden allgemeinen Formel dargestellt ist:

$$X\text{-}(O\text{-}C_2H_4)_m\text{-}(O\text{-}Y)_nOCH_2CH(OH)CH_2OH,$$

wobei X eine Kohlenwasserstoffgruppe von 1 bis 4 Kohlenstoffatomen darstellt, Y eine Kohlenwasserstoffgruppe von 3 bis 8 Kohlenstoffatomen darstellt, m eine ganze Zahl von 1 bis 100 darstellt und n eine positive ganze Zahl gleich oder kleiner als m darstellt.

**9.** Wässrige Dispersion gemäß Anspruch 7, bei der die organische Verbindung mit zwei Hydroxylgruppen unter Ethylenglycol, Propylenglycol, 1,4-Butylenglycol, Hexandiol, Cyclohexandimethanol, Bisphenol A, Diethylenglycol, Polyetherglycolen wie Polyethylenglycol, Polytetramethylenglycol, Polyesterdiolen, Polycarbonatdiolen und Mischungen dieser Diole ausgewählt ist.

**10.** Wässrige Dispersion gemäß Anspruch 7, bei der das zyklische Anhydrid unter Maleinsäureanhydrid, Succinsäureanhydrid, Itaconsäureanhydrid, 1,2-Cyclohexandicarboxylsäureanhydrid, aromatischen Diacarboxylsäureanhydriden, Phthalsäureanhydrid, Tetrabromphthalsäureanhydrid, Dichlorphthalsäureanhydrid, heterozyklischen Dicarboxylsäureanhydriden und Mischungen dieser Anhydride ausgewählt ist.

**11.** Wässrige Dispersion gemäß Anspruch 7, bei der das Monomer mit einer Epoxygruppe und Polyoxyethylen-Einheiten von der folgenden allgemeinen Formel dargestellt wird:

$$CH_2\text{-}CH\text{-}CH_2\text{-}O\text{-}(CH_2CH_2O)_p\text{-}R^1,$$
$$O$$

wobei p eine ganze Zahl von 1 bis 100 darstellt, $R^1$ ausgewählt ist unter einer gesättigten oder ungesättigten Alkylgruppe, einer Arylgruppe, einer Heteroringgruppe und einer Polypropylenoxidgruppe mit einer dieser Gruppen an ihrem Ende.

**12.** Wässrige Dispersion gemäß Anspruch 11, bei der der Substituent $R^1$ mit einem Halogenatom substituiert ist.

**13.** Wässrige Dispersion gemäß Anspruch 11 oder 12, bei der das Monomer mit einer Epoxygruppe und Polyoxyethylen-Einheiten unter Polyethylenglycolmethylglycidylether, Polyethylenglycolphenylglycidylether, Butylglycidylether von Polyethylenglycol-Polypropylenglycol-Copolymer ausgewählt ist.

**14.** Wässrige Dispersion gemäß Anspruch 3 oder 4, bei der die Verbindung $L^1$ und $L^2$ unter Wasser, Ethylenglycol, Butandiol, Propandiol, 1,6-Hexandiol, Neopentylglycol, Cyclohexan-Dimethanol, Trimethylolpropan, Glycerin, Pentaerythritol, Polyetherdiol und Polyesterdiol, Bisphenol A, Bisphenol F ausgewählt ist.

**15.** Wässrige Dispersion gemäß einem der vorangehenden Ansprüche, bei der die Verbindung (C) unter Tolylendiisocyanat, 4,4-Diphenylmethandiisocyanat, Hexamethylendiisocyanat, Xylylendiisocyanat, 1,5-Naphthalendiisocyanat, Isophorondiisocyanat, Lysindiisocyanat, hydriertem 4,4-Diphenylmethandiisocyanat, hydriertem Tolylendiisocyanat, Addukten mit Isocyanaten an beiden Enden, die aus Glycolen oder Diaminen und diesen Diisocyanaten gebildet sind, Mischungen dieser Verbindungen, Triphenylmethantriisocyanat und Polymethylenpolyvinylisocyanat ausgewählt ist.

**16.** Wässrige Dispersion gemäß einem der vorangehenden Ansprüche, bei der die Verbindung (D) unter Hydrazin, Oxalsäuredihydrazid, Malonsäuredihydrazid, Succinsäuredihydrazid, Glutarsäuredihydrazid, Adipinsäuredihydrazid, Sebacinsäuredihydrazid, Maleinsäuredihydrazid, Fumarsäuredihydrazid, Itaconsäuredihydrazid, Phthalsäuredihydrazid, Carbonsäuredihydraziden, Carbodihydraziden, Thiocarbodihydraziden, 4,4'-Oxybisbenzolsulfonylhydrazid und Polyacrylsäurehydrazid ausgewählt ist.

**17.** Tinten- oder Beschichtungszusammensetzung, die die wässrige Dispersion gemäß einem der vorangehenden Ansprüche zu 2 bis 40 Gew.-%,

2 bis 80 % Gew.-% Pigment,

10 bis 96 Gew.-% Wasser und

0 bis 50 Gew.-% wasserlösliches organisches Lösungsmittel umfaßt.

**18.** Klebstoffzusammensetzung, die die wässrige Dispersion gemäß einem der vorangehenden Ansprüche zu 2 bis 40 Gew.-%,

Wasser zu 10 bis 96 Gew.-% und

0 bis 50 Gew.-% wasserlösliches organisches Lösungsmittel umfaßt.

**Revendications**

**1.** Dispersion aqueuse d'un polyuréthane aqueux obtenue en faisant réagir :

(1) un polymère ($P^1$) présentant des groupes terminaux isocyanate et obtenu par la réaction :

d'un composé (A) présentant au moins deux groupes fonctionnels qui réagissent avec des groupes isocyanate et présentant au moins un groupe fonctionnel ionique choisi parmi un groupe ammonium quaternaire, amino tertiaire, carboxylate, carboxyle, sulfonate, acide sulfonique, phosphonium, acide phosphonique, ester d'acide sulfurique et des mélanges de ces groupes;
d'un composé (B) présentant des unités polyoxyéthylène et des groupes hydroxyle, et
d'un composé (C) présentant des groupes isocyanate dans un rapport molaire de 1,02-3/1 des groupes isocyanate au nombre total des groupes d'hydrogène actif des composés (A), (B),

et
(2) un composé (D) qui est un dihydrazide d'acide carboxylique ou un polyhydrazide d'acide carboxylique,

dans des quantités telles que le rapport d'équivalent des groupes hydrazine du composé (D) au groupe terminal isocyanate du polymère ($P^1$) est de 1,02 à 2/1,

lequel polyuréthane aqueux porte des groupes terminaux hydrazine, 5-180 milliéquivalents de groupes ioniques pour 100 g de polyuréthane aqueux et jusqu'à 20% d'unités polyoxyéthylène rapportés au poids du polyuréthane aqueux.

**2.** Dispersion aqueuse selon la revendication 1, dans laquelle le polymère ($P^1$) est obtenu par la réaction :

du composé (A);
du composé (B);
du composé (C); et en outre
d'un composé d'hydrogène actif ($L^1$) qui est différent du composé (A) ou du composé (B), dans laquelle
ledit composé (C) présente des groupes isocyanate dans un rapport molaire de 1,02-3/1 de groupes isocyanate au nombre total de l'hydrogène actif dans les composés (A), (B) et ($L^1$).

**3.** Dispersion aqueuse selon la revendication 2, dans laquelle le polymère ($P^1$) obtenu par la réaction du composé (A), du composé (B), du composé ($L^1$) et du composé (C) réagit encore avec un composé d'hydrogène actif ($L^2$) qui est différent du composé (A) ou du composé (B), dans laquelle le rapport des groupes isocyanate du polymère ($P^1$) aux groupes d'hydrogène actif du composé supplémentaire ($L^2$) est de 1,02-2/1.

**4.** Dispersion aqueuse selon la revendication 1, dans laquelle le polymère ($P^1$) obtenu par la réaction du composé (A), du composé (B) et du composé (C) réagit encore avec un composé d'hydrogène actif ($L^2$) qui est différent du composé (A) ou du composé (B), dans laquelle le rapport des groupes isocyanate du polymère ($P^1$) aux groupes d'hydrogène actif du composé supplémentaire ($L^2$) est de 1,02-2/1.

**5.** Dispersion aqueuse selon l'une quelconque des revendications 1 à 4, dans laquelle les composés (A) sont choisis parmi l'acide diméthylolpropionique, des amino-acides, des acides aminosulfoniques, des produits d'oxalkylation et de polyesterification des ces composés, des acides diaminocarboxyliques, le diaminobenzènesulfonate de sodium, le sel de disodium de monophosphate de glycérol, l'hydroxyéthylphosphonate de sodium, le diméthylolphosphonate de sodium, la N-méthyléthanolamine, des polyesterpolyols présentant des unités 5-sulfoisophthalate de sodium et des polyesterpolyols contenant des groupes carboxyle obtenus par une réaction d'addition-condensation de glycol avec un anhydrique polybasique aliphatique ou aromatique.

**6.** Dispersion aqueuse selon l'une quelconque des revendications précédentes, dans laquelle le composé (B) est choisi parmi le polyéthylèneglycol, un copolymère de polyéthylèneglycol-polypropylèneglycol et des monoalcools, lesquels sont des monoalkyléthers de ces diols.

**7.** Dispersion aqueuse selon la revendication 6, dans laquelle des composés (B) présentant des unités polyoxyéthylène sont un polyester obtenu par réaction de composés organiques présentant deux groupes hydroxyle, d'anhydrides d'acides cycliques et de monomères présentant un groupe époxy et des unités polyoxyéthylène.

**8.** Dispersion aqueuse selon la revendications 6, dans laquelle le composé (B) présentant des unités polyoxyéthylène est un polymère de poly(oxyde d'alkylène) qui est représenté par la formule générale :

$$X\text{-}(O\text{-}C_2H_4)_m\text{-}(O\text{-}Y)_nOCH_2CH(OH)CH_2OH,$$

dans laquelle X représente un groupe hydrocarboné ayant de 1 à 4 atomes de carbone, Y représente un groupe hydrocarboné ayant de 3 à 8 atomes de carbone, m indique un nombre entier de 1 à 100 et n indique un nombre entier positif égal ou inférieur à m.

**9.** Dispersion aqueuse selon la revendication 7, dans laquelle le composé organique présentant deux groupes hydroxyle est choisi parmi l'éthylèneglycol, le propylèneglycol, le 1,4-butylèneglycol, l'hexanediol, le cyclohexanediméthanol, le bisphénol A, le diéthylèneglycol, des polyétherglycols comme le polyéthylèneglycol, le polytétraméthylèneglycol, des polyesterdiols, des polycarbonatediols, et des mélanges de ces diols.

**10.** Dispersion aqueuse selon la revendication 7, dans laquelle l'anhydride d'acide cyclique est choisi parmi l'anhydride maléique, l'anhydride succinique, l'anhydride itaconique, l'anhydride d'acide 1,2-cyclohexanedicarboxylique, des anhydrides d'acides dicarboxyliques aromatiques, l'anhydride phthalique, l'anhydride tétrabromophtalique, l'anhydride dichlorophthalique, des anhydrides d'acides dicarboxyliques hétérocycliques et des mélanges de ces anhydrides.

**11.** Dispersion aqueuse selon la revendication 7, dans laquelle le monomère présentant un groupe époxy et des unités polyoxyéthylène est représenté par la formule générale :

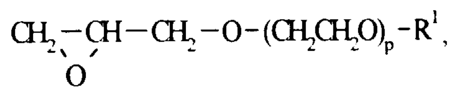

dans laquelle p indique un nombre entier de 1 à 100, $R^1$ est choisi parmi un groupe alkyle saturé ou insaturé, un groupe aryle, un groupe hétérocyclique et un groupe de poly(oxyde de propylène) avec un de ces groupes à sa terminaison.

**12.** Dispersion aqueuse selon la revendication 11, dans laquelle le substituant $R^1$ est substitué par un atome d'halogène.

**13.** Dispersion aqueuse selon la revendication 11 ou 12, dans laquelle le monomère présentant un groupe époxy et des unités polyoxyéthylène est choisi parmi le méthylglycidyléther de polyéthylèneglycol, le phénylglycidyléther de polyéthylèneglycol, un copolymère de butylglycidyléther de polyéthylèneglycol-polypropylèneglycol.

**14.** Dispersion aqueuse selon la revendication 3 ou 4, dans laquelle le composé $L^1$ et $L^2$ est choisi parmi l'eau, l'éthylèneglycol, le butanediol, le propanediol, le 1,6-hexanediol, le néopentylglycol, le cyclohexane-diméthanol, le triméthylolpropane, le glycérol, le pentaérythritol, un polyétherdiol et un polyesterdiol, le bisphénol A, le bisphénol F.

**15.** Dispersion aqueuse selon l'une quelconque des revendications précédentes, dans laquelle le composé (C) est choisi parmi le diisocyanate de tolylène, le diisocyanate de 4,4-diphénylméthane, le diisocyanate d'hexaméthylène, le diisocyanate de xylylène, le diisocyanate de 1,5-naphtalène, le diisocyanate d'isophorone, le diisocyanate de lysine, le diisocyanate de 4,4-diphénylméthane hydrogéné, le diisocyanate de tolylène hydrogéné, des produits d'addition présentant des isocyanate aux deux terminaisons formés à partir de glycols ou de diamines et des ces diisocyanate, des mélanges de ces composés, le triisocyanate de triphénylméthane et le polyvinylisocyanate de polyméthylène.

**16.** Dispersion aqueuse selon l'une quelconque des revendications précédentes, dans laquelle le composé (D) est choisi parmi l'hydrazine, le dihydrazide d'acide oxalique, le dihydrazide d'acide malonique, le dihydrazide d'acide succinique, le dihydrazide d'acide glutarique, le dihydrazide d'acide adipique, le dihydrazide d'acide sébacique, le dihydrazide d'acide maléique, le dihydrazide d'acide fumarique, le dihydrazide d'acide itaconique, le dihydrazide d'acide phtalique, des dihydrazides d'acides carboniques, des carbodihydrazides, des thiocarbodihydrazides, l'hydrazide de 4,4'-oxybisbenzènesulfonyle et l'hydrazide d'acide polyacrylique.

**17.** Composition d'encre ou de revêtement comprenant la dispersion aqueuse selon l'une quelconque des revendications précédentes à de 2 à 40% en poids,

2 à 80% en poids de pigment,

10 à 96% en poids d'eau, et
0 à 50% en poids de solvant organique soluble dans l'eau.

**18.** Composition adhésive comprenant la dispersion aqueuse selon l'une quelconque des revendications précédentes à de 2 à 40% en poids,

de l'eau à de 10 à 96% en poids et
de 0 à 50% en poids de solvant organique soluble dans l'eau.